Europäisches Patentamt

European Patent Office

Office européen des brevets

(19)

(11) Numéro de publication : **0 329 529 B1**

(12)

# FASCICULE DE BREVET EUROPEEN

(45) Date de publication du fascicule du brevet :
07.04.93 Bulletin 93/14

(51) Int. Cl.⁵ : **B29C 65/02,** B29C 65/34, C08J 5/12

(21) Numéro de dépôt : **89400356.5**

(22) Date de dépôt : **08.02.89**

(54) **Procédé de jonction de pièces en matière plastique, en utilisant un agent de réticulation et une résistance électrique de chauffage.**

(30) Priorité : **15.02.88 FR 8801758**

(43) Date de publication de la demande :
**23.08.89 Bulletin 89/34**

(45) Mention de la délivrance du brevet :
**07.04.93 Bulletin 93/14**

(84) Etats contractants désignés :
**AT BE CH DE ES FR GB GR IT LI LU NL SE**

(56) Documents cités :
**EP-A- 0 161 377
EP-A- 0 253 793
CH-A- 451 501
FR-A- 2 252 191
US-A- 4 695 335**

(73) Titulaire : **GAZ DE FRANCE (SERVICE NATIONAL)
23 rue Philibert-Delorme
F-75017 Paris (FR)**

(72) Inventeur : **Dufour, Denis
71, rue Georges Dessailly
F-95170 Deuil-la-Barre (FR)**

(74) Mandataire : **Lerner, François et al
LERNER & BRULLE S.C.P. 5, rue Jules Lefèbvre
F-75009 Paris (FR)**

EP 0 329 529 B1

## Description

L'invention concerne un procédé pour réunir une pièce de raccordement de forme cylindrique avec au moins une pièce tubulaire, les deux pièces présentant respectivement une surface intérieure et une surface extérieure avec des rayons voisins et étant réalisées en matière plastique thermofusible.

Pour réunir deux telles pièces, la technique du thermosoudage est aujourd'hui largement utilisée, notamment dans l'industrie gazière.

En particulier, les pièces à réunir, en général des tubes, peuvent être assemblées au moyen d'un manchon qui comporte sur sa face interne une résistance de chauffage, telle qu'un bobinage électrique. L'opération de soudage est réalisée en raccordant la résistance à une source électrique qui, par effet joule, échauffe ladite résistance et provoque la fusion locale de la matière plastique du manchon et du tube situé en regard, réalisant ainsi le soudage.

D'autres pièces, telles que des prises de branchement, des bouchons, etc..., peuvent être ainsi assemblées.

Un inconvénient de cette technique résulte de la nécessité de préparer les tubes avant de procéder au soudage, cette préparation consistant en un grattage superficiel des tubes.

Quant à la liaison par réticulation, elle est apparue plus récemment.

Au document FR-A-2 252 191, il est par exemple enseigné d'assembler deux tubes en venant déformer l'une des extrémités de l'un des tubes pour qu'il puisse recevoir une extrémité de l'autre tube ; après quoi les tubes ainsi mis en contact sont chauffés au niveau de leur surface de jonction, ce qui entraîne une contraction des pièces, le chauffage étant maintenu pendant une durée suffisante pour provoquer localement leur fusion.

La publication EP-A-0 161 377 fait aussi référence à une technique d'assemblage similaire.

Selon cette technique :

- On dispose la pièce de raccordement pour que sa surface intérieure entoure au moins partiellement la surface extérieure de la pièce tubulaire, de manière que lesdites surfaces soient placées en vis-à-vis,
- et on initie à chaud une réticulation des pièces au moins à proximité immédiate de leurs dites surfaces intérieure et extérieure, en utilisant un agent de réticulation de type peroxyde organique qu'on a fait diffuser dans les pièces.

Selon ce document, comme d'ailleurs le précédent, les pièces sont toutes réalisées en polymère au moins partiellement réticulé.

De surcroît, la chaleur nécessaire est ici apportée par l'extérieur et pénètre par la pièce de raccordement, ce qui constitue un inconvénient puisque cela impose des moyens de chauffage annexes et implique un chauffage de certaines pièces sur toute leur épaisseur.

Pour résoudre notamment ces problèmes, l'invention propose une solution qui associe les techniques de la réticulation et du thermosoudage, en améliorant les conditions pratiques de mise en oeuvre de la réticulation (limitation des risques de défaut de jonction et de réaction chimique intempestive ou mal contrôlée).

Pour cela, le procédé de l'invention, élaboré sur la base de l'enseignement de EP-A-0 161 377, se caractérisé tout d'abord en ce que :

a) on utilise des pièces en matière plastique non réticulée,

b) et on conduit la réticulation par chauffage de ces pièces par effet Joule, à partir d'une résistance électrique disposée à proximité de la surface intérieure de la pièce de raccordement, en alimentant électriquement cette résistance pour élever sa température entre 150 et 350° C environ avec un gradient de température compris entre 50 et 400° C par minute environ.

Cette façon de procéder présente plusieurs avantages. Notamment, l'utilisation d'une résistance électrique de chauffage disposée à proximité de la surface de jonction des pièces permet d'éviter leur fusion ou leur ramollissement sur toute leur épaisseur : ce ramollissement est localisé à proximité de l'interface de jonction, ce qui favorise la rapidité du chauffage et donc du refroidissement ultérieur.

On peut donc utiliser des pièces de plus grande épaisseur. En outre, la quantité d'agent réticulant nécessaire à une jonction de bonne qualité est moindre.

On notera également que la gamme dans laquelle sont comprises les vitesses d'élévation de température au moment de l'assemblage favorise l'obtention d'une jonction présentant une résistance élevée aux efforts de traction et une parfaite étanchéité aux fluides (notamment gazeux).

Il est a priori conseillé que le rayon de la surface intérieure de la pièce de raccordement soit légèrement supérieur au rayon de la surface extérieure de la pièce tubulaire que ladite pièce de raccordement recouvre, de manière que lesdites surfaces présentent entre-elles un léger jeu avant le déclenchement de l'étape b) précitée. De cette façon, la diffusion et l'imbrication moléculaire s'opèrera au mieux, directement, avec un bon maintien des pièces.

De préférence, on choisira en tant qu'agent de réticulation un péroxyde organique appartenant à la liste suivante :

- 2.2-di-tert.butyl peroxibutane
- tert.butyl peroxy stearyl carbonate
- tert.butyl peroxybenzoate
- 4.4-di ter.butyl peroxy n.butyl valerate
- tert.butyl cumyl peroxyde.

Dans l'industrie gazière, la matière plastique constitutive des tubes est le plus souvent du polyéthylène.

Or, les peroxydes mentionnés ci-dessus ont des temps de demi-vie dans le polyéthylène de l'ordre d'une minute pour des températures comprises entre 140 et 210°C environ.

Avec le procédé de l'invention, on va ainsi pouvoir obtenir des vitesses de réaction relativement rapides et donc une durée de chauffage des pièces relativement réduite, facilitant ainsi grandement les conditions d'intervention sur le terrain.

D'après les essais menés jusqu'à présent, les temps de chauffage des pièces sont compris entre 30 et 300 secondes environ.

En ce qui concerne les conditions particulières de mise en oeuvre, il a été prévu d'opérer comme suit :

## CONDITIONS DE MISE EN OEUVRE

On part donc de pièces fabriquées en matière plastique thermofusible non réticulée, telle que du polyéthylène.

Une fois choisi le peroxyde organique le plus approprié, on va l'introduire par diffusion dans les pièces, ces pièces étant, au moment de l'assemblage, disposées de façon que leurs surfaces mutuelles de jonction soient placées en vis-à-vis.

Pendant toute la durée de la diffusion, les pièces seront maintenues à une température inférieure à la température de ramollissement de la matière plastique qui les constitue (température de fusion cristalline dans le cas du polyéthylène), de sorte à permettre à l'agent de réticulation de diffuser vers les surfaces de jonction, sans pour autant entraîner la réticulation de la matière plastique laquelle, avec l'opération de scission, ne doit intervenir qu'à l'issue de la diffusion.

Pour parvenir à cette réticulation, on élèvera la température des pièces par l'intermédiaire de la résistance électrique de chauffage.

L'élévation de température sera conduite jusqu'à une gamme située, comme indiqué ci-dessus, entre 150 et 350°C environ, avec un gradient de température compris entre 50 et 400°C environ. L'intervalle de temps pendant lequel durera ce chauffage sera supérieur au temps de demi-vie du peroxyde choisi, de sorte à induire ainsi la réticulation de la matière plastique au moins à proximité immédiate des surfaces de jonction des pièces, assurant ainsi leur jonction étanche.

D'une façon classique, l'élévation de température sera obtenue en alimentant avec une énergie convenable la résistance électrique de chauffage, laquelle sera reliée aux bornes d'une source d'alimentation appropriée. Le réglage et le contrôle des paramètres de chauffage seront réalisés par tous moyens adaptés.

En pratique, on poursuivra ce chauffage dans la gamme des températures indiquées pendant un intervalle de temps suffisant pour atteindre le point de gel. D'après les tests menés, il a été remarqué que ce point de gel était habituellement atteint, à proximité de l'interface de jonction des pièces, pour un taux de réticulation de la matière plastique au moins égal à 1,2.

Une concentration en agent réticulant supérieure ou égale à 0,2 % par cm$^3$ de matière plastique, aura alors effectivement réagi.

Une fois cette réticulation effectuée, les pièces étant alors jointes de façon étanche, la température sera ramenée sensiblement à l'ambiante.

Pour mémoire, on rappelle que le taux T de réticulation d'un échantillon se définit par $T = \dfrac{2}{S + \sqrt{S}}$, où S, qui est la fraction non soluble de l'échantillon réticulé, est tel que $S = 1 - \dfrac{Mr}{Mo}$ avec :

Mo : masse de l'échantillon testé,

Mr : masse réticulée de cet échantillon.

Dans le cas du polyéthylène on utilisera, comme connu en soi, le solvant xylène pour déterminer la masse Mr.

Selon l'invention, l'apport aux pièces à joindre de l'agent de réticulation retenu peut s'envisager de deux façons différentes.

## TECHNIQUES D'APPORT DE L'AGENT DE RETICULATION

- On pourra tout d'abord apporter l'agent par l'intermédiaire d'une pellicule que l'on viendra placer au contact des surfaces de jonction des pièces à assembler.

Dans le cas où l'on désirera réunir bout à bout deux tubes par l'intermédiaire d'un manchon, la pellicule en question sera placée de façon qu'elle enrobe la surface extérieure des tubes, vers leur extrémité à relier.

Cette pellicule comprendra un support en matière plastique, tel que du polyéthylène, dans lequel sera incorporé l'agent de réticulation. La pellicule sera maintenue en place lors de l'élévation de température conduisant à la réticulation.

- On pourra également apporter l'agent au cours de la mise en forme des pièces en l'incorporant à la matière plastique qui les constitue.

## a. APPORT DE L'AGENT RETICULANT PAR L'INTERMEDIAIRE D'UNE PELLICULE DEPOSEE SUR LA SURFACE DES PIECES

La pellicule en question sera dans ce cas mise en place au moment où l'on désirera joindre les pièces.

Elle sera constituée en une matière plastique qui devra être susceptible d'être réticulée par le peroxyde retenu. En outre, cette matière plastique devra être compatible avec la matière plastique constitutive des pièces à joindre, c'est-à-dire ne pas entraîner de perturbations chimiques au cours des opérations de diffusion et de réticulation.

De préférence, la pellicule choisie comprendra, incorporée à elle, une concentration en poids d'agent de réticulation comprise entre 1 et 10 % environ et avantageusement de l'ordre de 5 %.

Son épaisseur sera en général de l'ordre de 10 à 100 μm.

D'une manière générale, les essais menés ont montré qu'à proximité immédiate des surfaces de jonction des pièces il devait y avoir dans les pièces, en fin de diffusion, une concentration supérieure, ou à la limite égale, à 0,2 % en masse d'agent réticulant.

EXEMPLE D'APPLICATION

On prend deux tubes en polyéthylène non réticulé et on vient enrouler autour de leurs surfaces périphériques extérieures, une pellicule en polyéthylène d'environ 50 μm d'épaisseur et comprenant de l'ordre de 5 % de peroxyde TBPB (tert.butyl peroxybenzoate) par cm³ de polyéthylène. On vient ensuite introduire sensiblement coaxialement les deux tubes dans l'orifice cylindrique à section circulaire du manchon dont le diamètre intérieur est très légèrement supérieur à celui des tubes.

Ceci effectué, les pièces étant à température ambiante (environ 20°C) on échauffe la résistance du manchon jusqu'à environ 250°C à un rythme de l'ordre de 200°C par minute. On laisse alors refroidir les pièces. La jonction obtenue est de bonne qualité, le taux de réticulation sur les deux interfaces de la pellicule en regard des tubes et du manchon étant supérieur à 1,2.

b. INCORPORATION DE l'AGENT DE RETICULATION AU MOMENT DE LA MISE EN FORME DES PIECES

Dans ce cas, l'une et/ou l'autres des deux pièces devant être réunies sont composées, dès leur "fabrication", d'un mélange comprenant, d'une part, une matière plastique thermofusible non réticulée, telle que du polyéthylène, et d'autre part, l'agent réticulant choisi. La concentration en poids d'agent réticulant dans la matière plastique est comprise entre 0,3 et 3 %. Elle sera de préférence de l'ordre de 1,5 %.

Sur la pièce de raccordement ainsi mise en forme, on vient alors placer la résistance électrique de chauffage que l'on noye à proximité immédiate de la surface de jonction de la pièce. Si cette résistance consiste en un fil électrique spiralé, ou bobinage, celui-ci est noyé dans la face intérieure généralement circulaire de l'orifice du manchon qui est destinée à venir en regard de la surface extérieure du(des) tube(s).

Comme on le comprend, il faudra avec cette technique prendre bien soin de contrôler le processus de mise en forme pour éviter à ce moment toute réticulation.

Quelle que soit la concentration initiale en agent réticulant, il devra y avoir une concentration suffisante d'agent pour qu'au moment où l'on réalise la jonction il y ait encore au moins 0,2 % en poids d'agent dans la matière plastique, à proximité de la surface de jonction des pièces.

Une fois réalisées, ces pièces pourront être soit utilisées immédiatement soit stockées (bien entendu là encore sans que la réticulation intervienne).

S'il y a stockage, celui-ci ne devra pas excéder deux ans.

EXEMPLE D'APPLICATION

On met en forme par extrusion deux tubes et un manchon au voisinage de la face intérieure duquel on vient noyer une résistance électrique, telle qu'un bobinage intégré.

Les pièces sont réalisées en polyéthylène et le manchon contient environ 1,4 % de peroxyde tert. butyl peroxy-benzoate (TBPB).

Ce peroxyde a un temps de demi-vie d'environ une minute à 180°C. Si la température de mise en forme atteint cette valeur, on devra alors ajuster les débits de manière que le temps de séjour dans la machine, à cette température du mélange polyéthylène/peroxyde TBBP soit inférieur à la minute.

Une fois réalisé, le manchon est stocké à 20°C environ. Il faut que dans les deux ans à venir les pièces soient réunies. Au moment choisi, il suffit alors de venir engager les tubes dans l'orifice du manchon et d'élever la température du bobinage de ce dernier de 20°C à 250°C environ, et ce à un rythme de l'ordre de 200°C par minute.

Parvenu à cette température maximale, on laisse les pièces refroidir, leur jonction étanche étant assurée.

**Revendications**

1. Procédé pour réunir une pièce de raccordement de forme cylindrique avec au moins une pièce tubulaire, les deux pièces présentant respectivement une surface intérieure et une surface extérieure avec des rayons voisins et étant réalisées en matière plastique thermofusible, dans lequel procédé :

 - on dispose la pièce de raccordement pour que sa surface intérieure entoure au moins partiellement la surface extérieure de la pièce tubulaire, de manière que lesdites surfaces soient placées en vis-à-vis,
 - et on initie à chaud une réticulation des pièces au moins à proximité immédiate de leurs dites surfaces intérieure et extérieure, en utilisant un agent de réticulation de type peroxyde organique qu'on a fait diffuser dans lesdites pièces,

caractérisé en ce que :

a) on utilise des pièces en matière plastique non réticulée,

b) et on conduit la réticulation par chauffage des ces pièces par effet Joule, à partir d'une résistance électrique disposée à proximité de la surface intérieure de la pièce de raccordement, en alimentant électriquement cette résistance pour élever sa température entre 150 et 350° C environ avec un gradient de température compris entre 50 et 400° C par minute environ.

2. Procédé selon la revendication 1 caractérisée en ce que le rayon de la surface intérieure de la pièce de raccordement est légèrement supérieur au rayon de la surface extérieure de la pièce tubulaire que ladite pièce de raccordement recouvre, de manière que lesdites surfaces présentent entre-elles un léger jeu avant le déclenchement de l'étape b) de la revendication 1.

3. Procédé selon la revendication 1 ou la revendication 2 caractérisé en ce qu'on choisit en tant qu'agent de réticulation, un peroxyde organique appartenant à la liste suivante :
   - 2.2-di-tert.butyl peroxybutane
   - tert.butyl peroxy stearyl carbonate
   - tert.butyl peroxybenzoate
   - 4.4-di.tert.butyl peroxy .butyl valerate
   - tert.butyl cumyl peroxide.

4. Procédé selon l'une des revendications 1 à 3 caractérisé en ce que l'élévation de température de la résistance entre 150 et 350°C est poursuivie pendant un intervalle de temps suffisant pour atteindre, à proximité desdites surfaces respectives intérieure et extérieure des pièces alors en contact, un taux de réticulation de la matière plastique au moins égal à 1,2 avec une concentration en poids d'agent de réticulation dans la matière plastique des pièces au moins égale à 0,2 %.

5. Procédé selon l'une quelconque des revendications précédentes caractérisé en ce que pour introduire l'agent de réticulation dans les pièces, on utilise une pellicule constituée en une matière plastique thermofusible non réticulée dans laquelle est incorporée une concentration en poids d'agent de réticulation comprise entre 1 et 10 % environ, et de préférence de l'ordre de 5 % et, avant l'étape b) de la revendication 1, on interpose cette pellicule entre lesdites surfaces respectives intérieure et extérieure des pièces à relier.

6. Procédé selon la revendication 5 caractérisé en ce qu'on choisit une pellicule ayant une épaisseur comprise entre 1 et 100 μm environ.

7. Procédé selon l'une quelconque des revendications 1 à 4 caractérisé en ce que lors de l'étape a) de la revendication 1, les pièces utilisées sont telles que la pièce tubulaire est dépourvue d'agent de réticulation, tandis que la pièce de raccordement contient, de fabrication, dans la matière plastique qui la constitue, une concentration en poids d'agent de réticulation comprise entre environ 0,3 et 3 %, et de préférence de l'ordre de 1,5 %.

**Patentansprüche**

1. Verfahren zum Zusammenfügen eines Anschlußteils zylindrischer Form mit mindestens einem rohrförmigen Teil, wobei die beiden Teile eine Innenfläche bzw. eine Außenfäche mit einander angenäherten Radien aufweisen und aus wärmeschmelzbarem Material ausgebildet sind, und wobei bei diesem Verfahren
   - das Anschlußteil zu dem Zweck, daß seine Innenfläche mindestens teilweise die Außenfläche des rohrförmigen Teils umgibt, derart angeordnet wird, daß besagte Flächen einander gegenüberliegen,
   - und eine Vernetzung der Teile wenigstens in der unmittelbaren Nachbarschaft ihrer genannten Innen- und Außenflächen in der Wärme in Gang gesetzt wird, indem ein Vernetzungsmittel vom Typ eines organischen Peroxids, das man in den Teilen diffundieren läßt, verwendet wird,

   dadurch gekennzeichnet, daß

   a) Teile aus nichtvernetztem Kunststoffmaterial verwendet werden

   b) und die Vernetzung in den Teilen durch Erwärmung mittels Joule-Effekt, ausgehend von einem in der nähe der Innenfläche des Anschlußteils angeordneten elektrischen Widerstand, durchgeführt wird, indem dieser Widerstand elektrisch beaufschlagt wird, um seine Temperatur zwischen ungefähr 150 und 350° C mit einem Temperaturgradienten zwischen ungefähr 50 und 400° C pro Minute zu erhöhen.

2. Verfahren nach Anspruch 1, dadurch gekennzeichnet, daß der Radius der Innenfläche des Anschlußteils geringfügig größer als der Radius der Außenfläche des rohrförmigen Teils ist, das das Anschlußteil überdeckt, derart, daß diese Flächen zueinander vor dem Auslösen des Schritts b) des Anspruchs 1 ein geringes Spiel aufweisen.

3. Verfahren nach Anspruch 1 oder 2, dadurch gekennzeichnet, daß als Vernetzungsmittel ein organisches Peroxid aus der folgenden Gruppe gewählt wird:
   - 2.2-Di-tert.-butylperoxybutan
   - Tert.-butylperoxystearylcarbonat
   - Tert.-butylperoxybenzoat
   - 4.4-Di-tert.-butylperoxybutylvalerat
   - Tert.-butylcumylperoxid

   gewählt wird.

4. Verfahren nach einem der Ansprüche 1 bis 3, dadurch gekennzeichnet, daß der Temperaturanstieg des Widerstands zwischen 150 und 350° C während eines Zeitintervalls erfolgt, das ausreicht, um im Bereich der betreffenden Innen- bzw. Außenfläche der dann in Berührung befindlichen Teile einen Vernetzungsgrad des Kunststoffmaterials wenigstens gleich 1,2 mit einer Gewichtskonzentration des Vernetzungsmittels in dem Kunststoffmaterial der Teile von mindestens 0,2% zu erreichen.

5. Verfahren nach einem der vorhergehenden Ansprüche, dadurch gekennzeichnet, daß zum Einführen des Vernetzungsmittels in die Teile eine Dünnschicht oder ein Film, aus wärme-schmelzbarem, nicht vernetztem Kunststoffmaterial gebildet, verwendet wird, in dem eine Gewichtskonzentration des Vernetzungsmittels von ungefähr zwischen 1 und 10 %, und vorzugsweise in der Größenordnung von 5% enthalten ist, und vor Schritt b) nach Anspruch 1 diese Dünnschicht zwischen den betreffenden Innen- bzw. Außenflächen der zu verbindenden Teile angeordnet wird.

6. Verfahren nach Anspruch 5, dadurch gekennzeichnet, daß eine Dünnschicht gewählt wird, die eine Stärke ungefähr zwischen 1 und 100 μm aufweist.

7. Verfahren nach einem der Ansprüche 1 bis 4, dadurch gekennzeichnet, daß bei Schritt b) nach Anspruch 1 die verwendeten Teile derart vorgesehen werden, daß das rohrförmige Teil an Vernetzungsmittel arm ist, während das Anschlußteil von der Herstellung her in dem dieses Teil ausbildenden Kunststoffmaterial eine Gewichtskonzentration an Vernetzungsmittel von ungefähr zwischen 0,3 und 3 %, und vorzugsweise in der Größenordnung von 1,5 % enthält.

## Claims

1. Method of joining a cylindrical-shaped joining part to at least one tubular part, the two parts having an inner surface and an outer surface respectively with adjacent radii, and being made of thermofusible plastics material, according to which method:
   - the joining part is disposed in such a manner that the inner surface thereof surrounds at least partly the outer surface of the tubular part, such that the surfaces are positioned opposite one another;
   - and hot cross-linking of the pieces is initiated at least in the immediate vicinity of the said inner and outer surfaces, using an organic peroxide-type cross-linking agent which has been diffused into the said parts; characterised in that:

   a) parts made of non cross-linked plastics material are used;

   b) and the cross-linking is performed by heating these parts by Joule effect, using an electrical resistor disposed adjacent the inner surface of the joining part, this heater being supplied electrically in order to raise the temperature thereof between 150° and 350°C, with a temperature gradient of approximately 50° to 400°C per minute.

2. Method according to claim 1 characterised in that the radius of the inner surface of the joining part is slightly larger than the outer surface of the tubular part covered by the joining part, such that there exists a slight gap between these surfaces before step b) of claim 1 is begun.

3. Method according to claim 1 or claim 2 characterised in that the cross-linking agent selected is an organic peroxide from the following list:
   - 2.2-di-tert. butyl peroxybutane
   - tert. butyl peroxy stearyl carbonate
   - tert. butyl peroxybenzoate
   - 4.4-di. tert. butyl peroxy butyl valerate
   - tert. butyl cumyl peroxide.

4. Method according to any of claims 1 to 3, characterised in that raising the temperature of the resistor by between 150° and 350° is continued for a sufficient length of time to obtain adjacent the respective inner and outer surfaces of the parts then in contact a cross-linking degree of the plastics material equal to at least 1.2, with a concentration of at least 0.2 weight % cross-linking agent in the plastics material of the parts.

5. Method according to any of the preceding claims, characterised in that in order to introduce the cross-linking agent into the parts, film comprising a non cross-linked thermofusible plastics material is used, in which a concentration of approximately 1 to 10 weight % and preferably approximately 5 % of cross-linking agent is incorporated, and in that before step b) of claim 1 is carried out, this film is inserted between the inner and outer surfaces of the parts to be joined.

6. Method according to claim 5 characterised in that a film having a thickness of between approximately 1 and 100 μ m is used.

7. Method according to any of claims 1 to 4, characterised in that in step a) of claim 1, the parts used are such that the tubular part contains no cross-linking agent, whereas the plastics material forming the joining part contains between approximately 0.3 and 3 weight %, and preferably approximately 1.5 weight % of cross-linking agent introduced during the production stage thereof.